# EUROPEAN PATENT SPECIFICATION

(11) **EP 1 831 728 B1**
(45) Date of publication and mention of the grant of the patent: **29.07.2009**
(21) Application number: 05857124.1
(22) Date of filing: 19.12.2005
(51) Int. Cl.: G02B 1/10, G02B 1/11, C09D 4/00, C08F 292/00, C03C 17/42, C08K 9/04, C09D 141/00

(54) **DISPLAYS HAVING A HIGH REFRACTIVE INDEX, DURABLE HARDCOAT LAYER**
ANZEIGEN AUF BASIS EINER DAUERHAFTEN HARTBESCHICHTUNGSSCHICHT MIT HOHEM BRECHUNGSINDEX
AFFICHAGE A COUCHE DE REVETEMENT DUR ET DURABLE A INDICE DE REFRACTION ELEVE

(30) Priority: 30.12.2004 US 26573
(43) Date of publication of application: 12.09.2007
(73) Proprietor: 3M Innovative Properties Company, St. Paul MN 55133-3427 (US)
(72) Inventor: POKORNY, Richard J., 3M CENTER, Saint Paul, Minnesota 55133-3427 (US); MADER, Roger A., 3M CENTER, Saint Paul, Minnesota 55133-3427 (US); OLSON, David B., 3M CENTER, Saint Paul, Minnesota 55133-3427 (US); KOLB, Brant U., 3M CENTER, Saint Paul, Minnesota 55133-3427 (US)
(74) Representative: Berryman, Natalia Grace
(86) International application number: PCT/US2005/045876
(87) International publication number: WO 2006/073773

(56) References cited:
- DATABASE WPI Section Ch, Week 200471 Derwent Publications Ltd., London, GB; Class A21, AN 2004-720918 XP002396342 & JP 2004 272197 A (DAINIPPON PRINTING CO LTD) 30 September 2004 (2004-09-30)

## Description

The development of films or coatings as protective films for display devices such as a CRT screen is well documented in the art. These include antireflective coatings, hardcoats, and optical coatings. Nevertheless, there continues to be a need for further improvement in the development of polymerizable high index materials for optical applications. Exemplary applications include antireflective coatings, hardcoats, and other film materials. Many polymerizable films have a refractive index of 1.5 or less. Because of the optical advantages, however, an increase of the refractive index to at least 1.58, and more preferably 1.6 or more, would be a desirable improvement. Furthermore, there is a need for durable, inexpensive, and yet high quality antireflective coatings that exhibit relatively higher refractive indices. The development of hard coat compositions having refractive indices of 1.58 or higher would facilitate a reduced cost of manufacturing, a reduction in raw material costs, and would also provide non-fringing hard coats on desirable substrates such as polyethylene terephthalate (PET).

JP-A-2004-272197 provides an antireflective stack having a low-refractive-index layer formed by coating a low-refractive-index composition having a nanoporous structure inside and/or on a surface directly or via another layer on at least one surface side of a light-transmitting base material film. The low-refractive-index composition having the nanoporous structure consists at least of (A) a monomer having, in one molecule, three or more functional groups which is cured with ionizing radiation, (B) a binder component containing a silicate compound expressed by a general formula (1) and/or (2), and (C) particulates which can be dispersed in a liquid medium for preparing coating liquid and have 5 to 300 nm mean particle size.

The present invention is summarized in the following items:
1. A display comprising:
   a light transmissive substrate;
   a hardcoat layer coupled to the substrate wherein the hardcoat layer comprises the reaction product of surface modified inorganic nanoparticles, at least one acrylate crosslinking agent, and an aromatic sulfur acrylate monomer, and an optional low refractive index layer coupled to said hardcoat layer.
2. The display of item 1 wherein said inorganic nanoparticles are surface modified zirconia.
3. The display of item 1 wherein the hardcoat layer has a refractive index of at least 1.58.
4. The display of item 1 wherein the aromatic sulfur acrylate monomer contains a naphthalenic group or more than one aromatic group.
5. The display of item 1 wherein said aromatic sulfur acrylate monomer is selected from the group of compounds defined by the following naphthalenic and phenylic formulas: 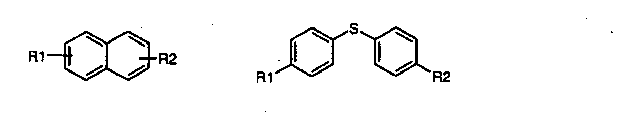 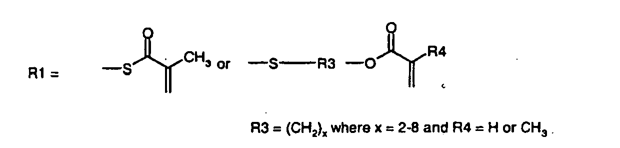 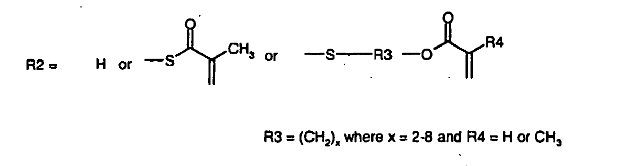
6. The display of item 1 wherein said aromatic sulfur acrylate monomer is selected from the group consisting of acrylic acid 2-[7-(2-acryloyloxy-ethylsulfanyl)-naphthalen-2-ylsulfanyl]-ethyl ester and acrylic acid 2-{4-[4-(2-acryloyloxy-ethylsulfanyl)-phenylsulfanyl]-phenylsulfanyl}-ethyl ester.

FIG. 1 structurally illustrates a phenyl class of aryl thio reagents.
FIG. 2 structurally illustrates a naphthyl class of aryl thio reagents.
FIG. 3 structurally illustrates the formation of acrylic acid 2-{4-[4-(2-acryloyloxy-ethylsulfanyl)-phenylsulfanyl]-phenylsulfanyl}-ethyl ester.
FIG. 4 structurally illustrates preferred embodiments of the present invention.
FIG. 5 illustrates an antireflective coating construction containing an optical coating, in accordance with the present invention.
FIG. 6 illustrates a typical display device in accordance with the present invention.

The present invention discloses compositions containing acrylate and/or methacrylate functional molecules. Accordingly, "acrylic" is defined as including both acrylate and/or methacrylate functional molecules. More specifically, the present invention discloses compositions containing an aromatic sulfur acrylate monomer. An "aromatic sulfur acrylate monomer" is defined as an acrylic functional monomer that includes aromatic functionality with at least one divalent sulfur atom bound to the aromatic group.

The radiation curable compositions which can be used in the present invention include one or more high index of refraction aromatic sulfur acrylate monomers wherein each monomer contains at least two rings comprising one or more aromatic structures, biphenyl or naphthalenic for example. The thio aromatic acrylate monomers preferably contain a naphthalenic group or more than one aromatic group. Or, the thio aromatic acrylate monomers will exhibit a refractive index of 1.55 or more, and more preferably at least 1.58.

One potentially useful set of such monomeric molecules is described by the following formulae, as integrated within various optical coatings described herein, and as applied to display systems, for example.

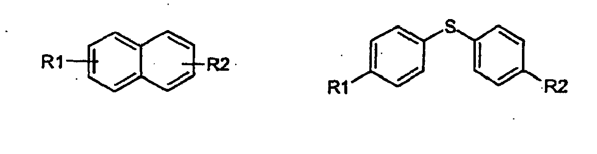

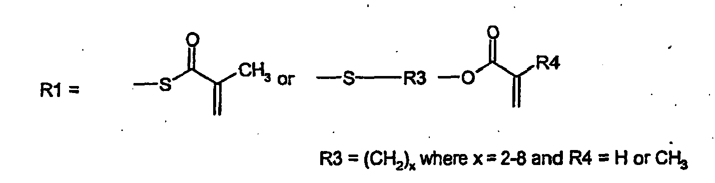

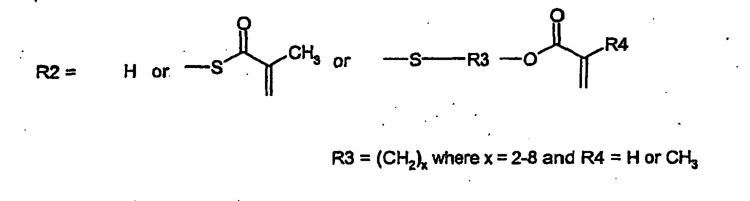

Exemplary molecules as illustrated above are described in Examples 11 and 12.

Another potentially useful set of such high index of refraction aryl sulfur acrylate monomer molecules are described by the following formula. 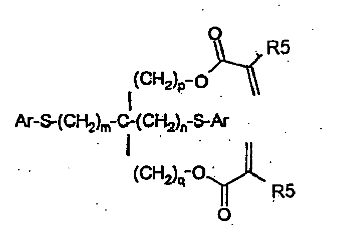 where R5 = H, CH₃; m, n, p, q are independently 1-6; Ar is any aromatic group.

Exemplary molecules as illustrated above are described in Example 1. The molecules described by Examples Ib, 1d, and 12, or structures numbered as 2, 4, and 11, exemplify high index aromatic sulfur acrylates. The molecules can be further characterized as naphthalenic sulfur acrylates, and, multi-aromatic, multi-acrylate sulfur acrylates as defined by the naphthalenic structure given above and the multi-aromatic and multi-acrylate structure given directly above. Polymerizable compositions incorporating the naphthalenic structure given above and the multi-aromatic and multi-acrylate structure given directly above exhibit relatively higher refractive indices and also relatively higher durability as shown in the data presented herein.

Compositions described herein may be characterized as nanocomposites. Nanocomposites are defined as a polymer matrix that contains well-dispersed nanoparticles. Nanoparticles are defined as particles that are smaller than 200 nanometers and often smaller than 100nm. U.S. Patent No. 5,385,776 exemplifies the current understanding of nanocomposites incorporated within polyamides. A nanoparticle is generally an inorganic particle such as a metal, metal oxide, metal nitride, metal carbide or metal chloride. The inclusion of high index nanoparticles can increase the refractive index of compositions incorporating such. Preferred nanoparticles include crystalline zirconia, although other high index nanoparticles such as titania, antimony, mixtures of metal oxides, and mixed metal oxides are acceptable. Crystalline zirconia is preferred over amorphous zirconia due to the greater refractive index of compositions containing crystalline zirconia. Functionalized silica nanoparticles may be added to the zirconia based compositions for added reinforcement and abrasion resistance of the finished coating. Examples of useful zirconia are those described in U.S. Patent No. 6,376,590, and examples of titania are described in U.S. Patent No. 6,432,526. Zirconia particles may be supplied by NALCO and BUHLER, for example. The preferred weight percent range of functionalized zirconia is from 25 to 75%, and more preferably from 40 to 60%. If desired, silica nanoparticles may be employed to complement the total zirconia nanoparticles in the weight percent range given. In further accordance with the present invention, a relatively small percentage of relatively larger particles, but still less than one micron (µm) in size, may be included in the present compositions. Since the percentage is low, the use of larger particles of relatively high or low index is included.

Surface modification of the nanoparticles relates to the reaction of specific molecules on the surface of particles, and is useful in achieving good dispersion or solubility within the polymer matrix, coating transparency, and coating durability. Relative to surface modifying nanoparticles, acrylate functionality is preferred over methacrylate functionality. On the other hand, methacrylate functionality is preferred over non-reactive, or nonpolymerizable, functionality.

The nanoparticles may also be treated with surface modifying agents such as carboxylic acids, silanes and/or dispersants to help compatibilize them with the polymer matrix. U.S. Patent No. 6,329,058 exemplifies typical surface modifiers. In essence, it is believed that surface modification prevents particle agglomeration thereby facilitating particle dispersion within the monomers and resins, and therefore enhancing the transparency of the coating formulation. Furthermore, the mixtures of the present invention contain high index nanoparticles thus enabling the formation of very thin but uniform coatings that may then be UV cured to form uniform high refractive index layers. Surface modification is also necessary for transparency and assist in easy particle dispersion in the monomers and resins. Surface modifier molecules exhibit a functionality that can covalently bond or adsorb to the particle surface. For example, carboxylic acid or silane functionality can covalently bond or adsorb to the particle surface and examples of these modifiers include methoxyethoxyethoxyacetic acid (MEEAA) and a PEG-silane commercially available under the trade designation "Silquest® A1230". The use of surface modifiers with high refractive index is also preferred and includes naphthyl acetic acid and trimethoxy phenyl silane.

The nanoparticles may also be surface modified by reactive or copolymerizable surface modifiers. Reactive surface modification means that surface modifiers are employed that include functional groups that facilitate polymerization in addition to functionality that can either adsorb or covalently bond with the particle surface. When a coating is polymerized (or cured), it forms a nanocomposite having particles covalently linked to the polymer matrix thus enhancing the durability of the cured coating. Examples of such modifiers are acrylic acid, methacrylic acid, and silanes with a radical polymerizable group, such as the preferred trimethoxysilylpropylmethacrylate. When employing mixtures of nanoparticles, a combination of benefits may be realized. For example, surface modified zirconia may be added to raise the refractive index, while surface modified silica may be added to further enhance durability. It is preferred that the nanoparticles contain polymerizable surface modifiers, however, less than or equal to 50% of the total amount of surface modifier may be composed of non-functional modifiers that can also be added and may be useful for nanoparticle dispersion in certain resins.

It is believed that copolymerizable surface modification provides a functional group that enables the functionalized particle to co-polymerize with the reactive monomers and crosslinkers in the formulation. Relative to surface modifying nanoparticles, acrylate functionality is preferred over methacrylate functionality. On the other hand, methacrylate functionality is preferred over non-reactive, or non-polymerizable, functionality. As the nanocomposite cures, the resultant network is heavily crosslinked by selection of raw materials with substantial acrylate functionality.

The composition optionally comprises at least one photoinitiator. A single photoinitiator or blends thereof may be employed in the various films and/or coatings. In general, the photoinitiator(s) are at least partially soluble (e.g. at the processing temperature of the resin) and substantially colorless after being polymerized. The photoinitiator may be (e.g. yellow) colored, provided that the photoinitiator is rendered substantially colorless after exposure to the UV light source.

Suitable photoinitiators, and preferably UV photoinitiators, include monoacylphosphine oxide and bisacylphosphine oxide. Commercially available mono or bisacylphosphine oxide photoinitiators include 2,4,6-trimethylbenzoydiphenylphosphine oxide, commercially available from BASF (Charlotte, NC) under the trade designation "Lucirin® TPO"; ethyl-2,4,6-trimethylbenzoylphenyl phosphinate, also commercially available from BASF under the trade designation "Lucirin® TPO-L"; and bis(2,4,6-trimethylbenzolyl)-phenylphosphine oxide commercially available from Ciba Specialty Chemicals under the trade designation "Irgacure® 819". Other suitable photoinitiators include 2-hydroxy-2-methyl-1-phenyl-propan-1-one, commercially available from Ciba Specialty Chemicals under the trade designation Darocur 1173. Other photoinitiators are commercially available under the tradenames "Darocur 4265" "Irgacure 651", "Irgacure 1800", "Irgacure® 369", "Irgacure® 1700", and "Irgacure® 907". The photoinitiator is generally added at about 0.5 to 4 phr (part per hundred resin) to the resin composition. More or less X can be employed depending on the requirements for color and cure speed, and other design criteria.

The polymerizable acrylate matrix will contain one or more crosslinking agents that are useful in the production of the crosslinked polymer component. The crosslinking agents are selected from a wide variety of di- or polyfunctional moieties which are capable of crosslinking monomer species. In general, the reactive functionalities which serve as active sites for such crosslinking are ethylenic functions, but other reactive and effective crosslinking functions are similarly useful as will be hereinafter described. The use of crosslinking agents in the formulation of polymers is well known to those skilled in the art, who similarly recognize that it is necessary for such agents to have at least two reactive functionalities.

The crosslinking agent may be formed as an ethylenically unsaturated monomer. The ethylenically unsaturated monomer is preferably a multifunctional ethylenically unsaturated ester of (meth)acrylic acid selected from the group consisting of a bifunctional ethylenically unsaturated ester of acrylic or methacrylic acid, a trifunctional ethylenically unsaturated ester of acrylic or methacrylic acid, a tetrafunctional ethylenically unsaturated ester of acrylic or methacrylic acid, and combinations thereof. Of these, trifunctional and tetrafunctional ethylenically unsaturated esters of (meth)acrylic acid are more preferred.

Particularly preferred ethylenically unsaturated monomers have the formula: 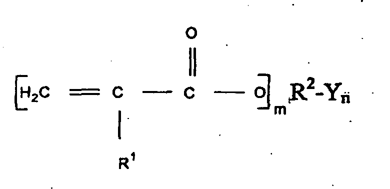 wherein R¹ represents a member selected from the group consisting of hydrogen, halogen, and lower alkyl group, preferably having one to four carbon atoms, more preferably hydrogen or methyl; R² represents a polyvalent organic group having a molecular weight of 14 to 1000 and a valence ofm+n; m represents an integer designating the number of acrylic or methacrylic groups or both in the ester, preferably from 2 to 9, more preferably from 2 to 5, and where a mixture of acrylic or methacrylic monomers is used, preferably having an average value of 1.05 to 5; n represents an integer having a value of 1 to 5; and Y is selected from the group consisting of hydrogen, C₁ -C₅ lower alkyl groups and protic functional groups, preferably selected from the group consisting of -OH, -COOH, -SO₃ H, -SO(OH)₂, -PO(OH)₂, and oxazolidone. The polyvalent organic group R² can be cyclic or linear, branched, aromatic, aliphatic, or heterocyclic having nitrogen, nonperoxidic oxygen, sulfur, or phosphorus atoms. The acrylate ester monomers are employed in the coating at 20% to 80% by weight, more preferably at 30% to 70%. Examples of suitable multifunctional ethylenically unsaturated esters of (meth)acrylic acid are the polyacrylic acid or polymethacrylic acid esters of polyhydric alcohols including, for example, the diacrylic acid and dimethylacrylic acid ester of aliphatic diols such as ethyleneglycol, triethyleneglycol, 2,2-dimethyl-1,3-propanediol, 1,3-cyclopentanediol, 1-ethoxy-2,3-propanediol, 2-methyl-2,4-pentanediol, 1,4-cyclohexanediol, 1,6-hexamethylenediol, 1,2-cyclohexanediol, 1,6-cyclohexanedimethanol; the triacrylic acid and trimethacrylic acid esters of aliphatic triols such as glycerin, 1,2,3-propanetrimethanol, 1,2,4-butanetriol, 1,2,5-pentanetriol, 1,3,6,-hexanetriol, and 1,5,10-decanetriol; the triacylic acid and trimethacrylic acid esters of tris(hydroxyethyl) isocyanurate; the tetraacrylic and tetramethacrylic acid esters of aliphatic tetrols, such as 1,2,3,4-butanetetrol, 1,1,2,2,-tetramethylolethane, 1,1,3,3,-tetramethylolpropane, and pentaerythritol; the pentaacrylic acid and pentamethacrylic acid esters of aliphatic pentols such as adonitol; the hexaacrylic acid and hexamethacrylic acid esters of hexanols such as sorbitol and dipentaerythritol; the diacrylic acid and dimethacrylic acid esters of aromatic diols such as resorcinol, pyrocatechol, bisphenol A, and bis(2-hydroxyethyl) phthalate; the trimethacrylic acid ester of aromatic triols such as pyrogallol, phloroglucinol, and 2-phenyl-2,2-methylolethanol. Preferably, for advantageous acid resistance, the multifunctional ethylenically unsaturated ester of (meth)acrylic acid is a nonpolyethereal multifunctional ethylenically unsaturated ester of (meth)acrylic acid. More preferably, the multifunctional ethylenically unsaturated ester of (meth)acrylic acid is selected from the group consisting of trimethylolpropane triacrylate, pentaerythritol triacrylate, pentaerythritol trimethacrylate, di-pentaerythritol pentacrylate and a combination thereof. Most preferably, the crosslinking monomer is pentaerythritol triacrylate. Pentaerythritol triacrylate (PETA) is commercially available from several sources including Sartomer of Sexton, PA under the trade designation "SR944"; from Osaka Organic Chemical Industry, Ltd. Of Osaka, Japan under the trade designation "Viscoat® #300"; from Toagosei Co. Ltd., Tokyo, Japan under the trade designation "Aronix M-305"; and from Eternal Chemical Co., Ltd., Kaohsiung, Taiwan under the trade designation "SR351" and from Toagosei Co. Ltd. under the trade designation "Aronix M-309".

Preparation and/or requisition of the aforementioned crosslinkers is either described in the art, such as U.S. Patent No. 4,396,476 or commercially available. Exemplary suppliers include Sartonier Co. of Exton, Pennsylvania, and UCB Radcure of Smyrna, Georgia.

Preferred ranges of zirconia are from 25 to 75 wt%, and more preferably from 40 to 60 wt% of the total composition. The resin matrix would then make up the complement of the composition, or, from 75 to 25 wt%, and more preferably from 60 to 40 wt%. The preferable level of crosslinker in the resin is from 20 to 80 wt% of the total weight of the resin. The remainder of the resin is the aromatic sulfur acrylate, or, from 80 to 20 wt% of the total weight of the resin.

The use of matte coatings as optical films is well known in the display industry. A matte appearance provides enhanced viewing for the reader by lowering glare through the use of relatively larger particles, 1-10 micrometers, that provide "scattered reflection". This sort of product can be prepared without any AR function at all. However, the antiglare (AG) character provided by these larger particles may be added to an antireflection (AR) construction by incorporation of the large (1-10 (micron(s)) µm) particles either in the hardcoat layer or in the high index layer as described by Fuji, U.S. Patent No. 6,693,746.

Accordingly, a particulate matting agent may optionally be incorporated into the: composition described herein (e.g. to impart anti-glare properties). The particulate matting agent also prevents the reflectance decrease and uneven coloration caused by interference with an associated hard coat layer. The particulate matting agent should preferably be transparent, exhibiting transmission values of greater than 90%. Alternatively, or in addition thereto, the haze value is preferably less than 5%, and more preferably less than 2%, and most preferably less than 1%.

Exemplary systems incorporating matting agents into a hard coating layer, but having a different hard coating composition, are described, for example, in U.S. Patent No. 6,693,746. Further, exemplary matte films are commercially available from U.S.A. Kimoto Tech of Cedartown, Georgia, under the trade designation "N4D2A."

The amount of particulate matting agent added is between 0.5 and 10% of the total solids of the composition, depending upon the thickness of the layer 18, with a preferred amount around 2%. The anti-glare layer 18 preferably has a thickness of 0.5 to 10 (microns) µm, more preferably 0.8 to 7 (microns) µm, which is generally in the same thickness range of gloss hard coatings.

The average particle diameter of the particulate matting agent has a predefined minimum and maximum that is partially dependent upon the thickness of the layer. However, generally speaking, average particle diameters below 1.0 (micron) µm do not provide the degree of anti-glare sufficient to warrant inclusion, while average particle diameters exceeding 10.0 (microns) µm deteriorate the sharpness of the transmission image. The average particle size is thus preferably between 1.0 and 10.0 (micron(s)) µm, and more preferably between 1.7 and 3.5 (microns) µm, in terms of the number-averaged value measured by the Coulter method.

As the particulate matting agent, inorganic particles or resin particles are used including, for example, amorphous silica particles, TiO₂ particles, Al₂O₃ particles, cross-linked acrylic polymer particles such as those made of cross-linked poly(methyl methacrylate), cross-linked polystyrene particles, melamine resin particles, benzoguanamine resin particles, and cross-linked polysiloxane particles. By taking into account the dispersion stability and sedimentation stability of the particles in the coating mixture for the anti-glare layer and/or the hard coat layer during the manufacturing process, resin particles are more preferred, and in particular cross-linked polystyrene particles are preferably used since resin particles have a high affinity for the binder material and a small specific gravity.

As for the shape of the particulate matting agent, spherical and amorphous particles can be used. However, to obtain a consistent anti-glare property, spherical particles are desirable. Two or more kinds of particulate materials may also be used in combination.

Other additives known for their use in optical films may be included in the present compositions. For example, UV sensitizers, oxygen scavengers, and other components useful in free radical curing may be employed as known in the art. Other optional additives include antioxidants, UV absorbers, surfactants, other dispersants, colorants, pigments, and other particles, other photoinitiators, and other ingredients known in the art.

Thin films can be applied using a variety of techniques, including dip coating, forward and reverse roll coating, wire wound rod coating, and die coating. Die coaters include knife coaters, slot coaters, slide coaters, fluid bearing coaters, slide curtain coaters, drop die curtain coaters, and extrusion coaters among others. Many types of die coaters are described in the literature such as by Edward Cohen and Edgar Gutoff, Modern Coating and Drying Technology, VCH Publishers, NY 1992, ISBN 3-527-28246-7 and Gutoff and Cohen, Coating and Drying Defects: Troubleshooting Operating Problems, Wiley Interscience, NY ISBN 0-471-59810-0.

A die coater generally refers to an apparatus that utilizes a first die block and a second die block to form a manifold cavity and a die slot. The coating fluid, under pressure, flows through the manifold cavity and out the coating slot to form a ribbon of coating material. Coatings can be applied as a single layer or as two or more superimposed layers. Although it is usually convenient for the substrate to be in the form of a continuous web, the substrate may also be formed to a succession of discrete sheets.

Accordingly, the thickness of the film may range from as small as 0.05 (microns) µm to as much as eight or more (microns) µm depending on its application. As one of ordinary skill will appreciate, the film thickness may vary depending upon the desired light reffectance/absorbency characteristics in conjunction with the desired durability characteristics.

Other known techniques of preparing multilayer films include spin coating, and knife coating. U.S. Patent No. 6,737,154 exemplifies one method of manufacturing a multilayer polymeric film. The methods of forming a multilayer film construction are known in the art and therefore, further comment is not necessary.

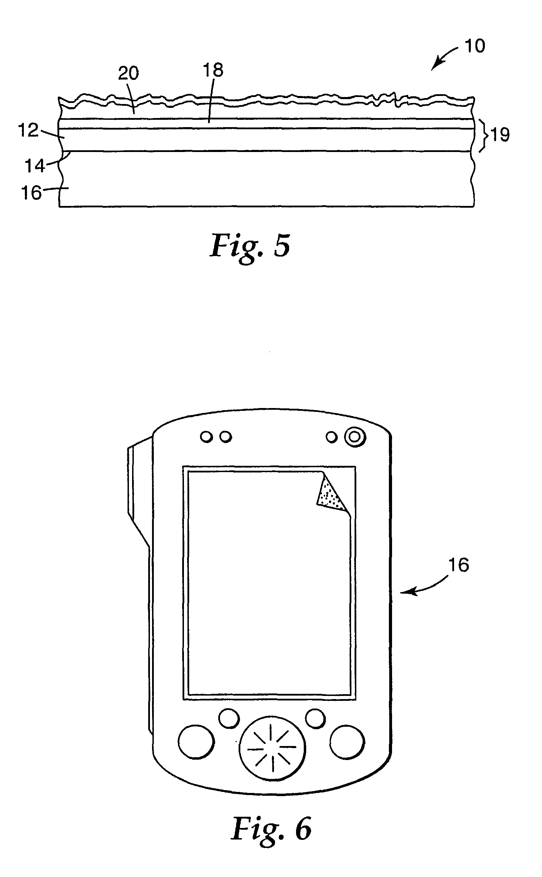

The high index hard coats described above are included within a film construction, and more preferably within an antireflective film construction for use in an optical display. As shown in FIGS. 5 and 6, a coating 10 (preferably an antireflective coating) contains a substrate 12 formed from PET or polycarbonate, or any other material recognized for its utility as a substrate in antireflective films. The substrate 12 is coupled to a display device 16 and also to a juxtaposed layer outwardly oriented from the substrate 12. An optional adhesive 14 may be employed to adhesively couple the resin substrate 12 to the display device 16. In accordance with the present invention, a high index hardcoat layer 18 is coupled to and layered over substrate 12 thereby forming an outwardly oriented layer in physical contact with substrate 12. In yet another aspect of the invention, the hardcoat layer 18 also functions as a high index layer typically forming a separate layer in the AR construction and having a relatively high refractive index of at least 1.55 and more preferably 1.58. The refractive index may range up to 1.75. As such, the need for a separate high index layer is obviated given that the hardcoat layer provides the durability and high index normally achieved by two discrete high index and hard coat layers. A thin low index layer 20, having a refractive index of 1.5 or less, is next optionally coupled to and/or layered over hardcoat layer 18.

The low index layer 20 may be formed as known in the art. The low index layer typically has a refractive index of 1.5 or less. Typically the refractive index of the low index layer ranges from 1.35 to 1.45. The difference in the refractive index between the high index layer and low index layer is typically at least 0.15 or greater and more typically 0.20 or greater. U.S. Patent No. 6,723,423 exemplifies the known understanding of forming a low refractive index layer. An exemplary low index layer may be formed from low refractive index fluoropolymer compositions and derived from an interpenetrating polymer network or semi-interpenetrating polymer network which includes a reactive fluoroplastic and/or a fluoroelastomer (i.e. the functional fluoropolymer phase) blended with multi-functional acrylates (i.e. the acrylate phase) such as trimethylolpropane triacrylate (TMPTA) and optionally additional fluorinated mono-functional acrylate or multi-functional fluorinated acrylate which can be coated and cured by ultraviolet light or by thermal means. The presence of an acrylate crosslinker provides a composition with both low refractive index and improved adhesion to high index polymer substrates such as polyethylene terephthalate ("PET") or hard coated PET films. The low index coating mixture preferably describes a reactive high molecular weight fluoropolymer(s) that can participate in the crosslinking reactions between the monomeric multi-functional acrylates. This enhances the crosslinkability of the fluoropolymer phase to the forming polyacrylate phase and produces a co-crosslinked, interpenetrating or semi-interpenetrating polymer network with enhanced interfacial contact between the high index layer and the low index layer and thereby improves durability and low refractive index.

The coating compositions described herein preferably provides suitable Abrasion Resistance, as determined by the test method described in further detail in the examples. The Abrasion Resistance is typically 3 or less, and preferably, no greater than 2.

The term "optical display", or "display panel", can refer to any conventional non-illuminated and in particular illuminated optical displays, including multi-character multi-line displays such as liquid crystal displays ("LCDs"), plasma displays, front and rear projection displays, cathode ray tubes ("CRTs"), and signage, as well as single-character or binary displays such as light emitting diodes ("LEDs"), signal lamps and switches. The exposed surface of such display panels may be referred to as a "lens." The invention is particularly useful for displays having a viewing surface that is susceptible to being touched or contacted by ink pens, markers and other marking devices, wiping cloths, and paper items.

The coatings can be employed in a variety of portable and non-portable information display articles. These articles include PDAs, cell phones (including combination PDA/cell phones), LCD televisions (direct lit and edge lit), touch sensitive screens, wrist watches, car navigation systems, global positioning systems, depth finders, calculators, electronic books, CD and DVD players, projection televisions screens, computer monitors, notebook computer displays, instrument gauges, instrument panel covers, and signage such as graphic displays. The viewing surfaces can have any conventional size and shape and can be planar or non-planar, although flat panel displays are preferred.

The coating composition or coated film can be employed on a variety of other articles as well such as for example camera lenses, eyeglass lenses, binocular lenses, mirrors, retroreflective sheeting, automobile windows, building windows, train windows, boat windows, aircraft windows, vehicle headlamps and taillights, display cases, eyeglasses, road pavement markers (e.g. raised) and pavement marking tapes, overhead projectors, stereo cabinet doors, stereo covers, watch covers, as well as optical and magneto-optical recording disks.

In the case of display panels, the substrate 12 is light transmissive, meaning light can be transmitted through the substrate 12 such that the display can be viewed. Both transparent (e.g. gloss) and matte light transmissive substrates 12 are employed in display panels.

The substrate 12 may comprise or consist of any of a wide variety of non-polymeric materials, such as glass, or various thermoplastic and crosslinked polymeric materials, such as polyethylene terephthalate (PET), (e.g. bisphenol A) polycarbonate, cellulose acetate, poly(methyl methacrylate), polyolefins such as biaxially oriented polypropylene which are commonly used in various optical devices. The substrate may also comprise or consist of polyamides, polyimides, phenolic resins, polystyrene, styrene-acrylonitrile copolymers, and epoxies. Typically the substrate will be chosen based in part on the desired optical and mechanical properties for the intended use. Such mechanical properties typically will include flexibility, dimensional stability and impact resistance. The substrate thickness typically also will depend on the intended use. For most applications, substrate thicknesses of less than 0.5 mm are preferred, and more preferably 0.02 to 0.2 mm. Self-supporting polymeric films are preferred. The polymeric material can be formed into a film using conventional filmmaking techniques such as by extrusion and optional uniaxial or biaxial orientation of the extruded film. The substrate can be treated to improve adhesion between the substrate and the hardcoat layer, e.g., chemical treatment, corona treatment such as air or nitrogen corona, plasma, flame, or actinic radiation. If desired, an optional tie layer or primer can be applied to the substrate and/or hardcoat layer to increase the interlayer adhesion.

Various light transmissive optical film are known including multilayer optical films, microstructured films such as retroreflective sheeting and brightness enhancing films, (e.g. reflective or absorbing) polarizing films, diffusive films, as well as (e.g. biaxial) retarder films and compensator films such as described in U.S. Patent Application Publication No. 2004-0184150, filed January 29, 2004.

As described is U.S. Patent Application Publication 2003/0217806, multilayer optical films, i.e., films that provide desirable transmission and/or reflection properties at least partially by an arrangement of microlayers of differing refractive index. The microlayers have different refractive index characteristics so that some light is reflected at interfaces between adjacent microlayers. The microlayers are sufficiently thin so that light reflected at a plurality of the interfaces undergoes constructive or destructive interference in order to give the film body the desired reflective or transmissive properties. For optical films designed to reflect light at ultraviolet, visible, or near-infrared wavelengths, each microlayer generally has an optical thickness (i.e., a physical thickness multiplied by refractive index) of less than 1 µm. However, thicker layers can also be included, such as skin layers at the outer surfaces of the film, or protective boundary layers disposed within the film that separate packets of microlayers. Multilayer optical film bodies can also comprise one or more thick adhesive layers to bond two or more sheets of multilayer optical film in a laminate.

The reflective and transmissive properties of multilayer optical film body are a function of the refractive indices of the respective microlayers. Each microlayer can be characterized at least at localized positions in the film by in-plane refractive indices nₓ, n_{y}, and a refractive index n_{z} associated with a thickness axis of the film. These indices represent the refractive index of the subject material for light polarized along mutually orthogonal x-, y-, and z-axes. In practice, the refractive indices are controlled by judicious materials selection and processing conditions. Films can be made by co-extrusion of typically tens or hundreds of layers of two alternating polymers A, B, followed by optionally passing the multilayer extrudate through one or more multiplication die, and then stretching or otherwise orienting the extrudate to form a final film. The resulting film is composed of typically tens or hundreds of individual microlayers whose thicknesses and refractive indices are tailored to provide one or more reflection bands in desired region(s) of the spectrum, such as in the visible or near infrared. In order to achieve high reflectivities with a reasonable number of layers, adjacent microlayers preferably exhibit a difference in refractive index (δ nₓ) for light polarized along the x-axis of at least 0.05. If the high reflectivity is desired for two orthogonal polarizations, then the adjacent microlayers also preferably exhibit a difference in refractive index (δ n_{y}) for light polarized along the y-axis of at least 0.05. Otherwise, the refractive index difference can be less than 0.05 and preferably 0 to produce a multilayer stack that reflects normally incident light of one polarization state and transmits normally incident light of an orthogonal polarization state. If desired, the refractive index difference (δ n_{z}) between adjacent microlayers for light polarized along the z-axis can also be tailored to achieve desirable reflectivity properties for the p-polarization component of obliquely incident light.

Exemplary materials that can be used in the fabrication of polymeric multilayer optical film can be found in PCT Publication WO 99/36248 (Neavin et al.). Desirably, at least one of the materials is a polymer with a stress optical coefficient having a large absolute value. In other words, the polymer preferably develops a large birefringence (at least 0.05, more preferably at least 0.1 or even 0.2) when stretched. Depending on the application of the multilayer film, the birefringence can be developed between two orthogonal directions in the plane of the film, between one or more in-plane directions and the direction perpendicular to the film plane, or a combination of these. In special cases where isotropic refractive indices between unstretched polymer layers are widely separated, the preference for large birefringence in at least one of the polymers can be relaxed, although birefringence is still often desirable. Such special cases may arise in the selection of polymers for mirror films and for polarizer films formed using a biaxial process, which draws the film in two orthogonal in-plane directions. Further, the polymer desirably is capable of maintaining birefringence after stretching, so that the desired optical properties are imparted to the finished film. A second polymer can be chosen for other layers of the multilayer film so that in the finished film the refractive index of the second polymer, in at least one direction, differs significantly from the index or refraction of the first polymer in the same direction. For convenience, the films can be fabricated using only two distinct polymer materials, and interleaving those materials during the extrusion process to produce alternating layers A, B, A, B, etc. Interleaving only two distinct polymer materials is not required, however. Instead, each layer of a multilayer optical film can be composed of an unique material or blend not found elsewhere in the film. Preferably, polymers being coextruded have the same or similar melt temperatures.

Exemplary two-polymer combinations that provide both adequate refractive index differences and adequate inter-layer adhesion include: (1) for polarizing multilayer optical film made using a process with predominantly uniaxial stretching, PEN/coPEN, PET/coPET, PEN/sPS, PET/sPS, PEN/Eastar^{™}, and PET/Eastr^{™}, where "PEN" refers to polyethylene naphthalate, "coPEN" refers to a copolymer or blend based upon naphthalene dicarboxylic acid, "PET" refers to polyethylene terephthalate, "coPET" refers to a copolymer or blend based upon terephthalic acid, "sPS" refers to syndiotactic polystyrene and its derivatives, and Eastar^{™} is a polyester or copolyester (believed to comprise cyclohexanedimethylene diol units and terephthalate units) commercially available from Eastman Chemical Co.; (2) for polarizing multilayer optical film made by manipulating the process conditions of a biaxial stretching process, PEN/coPEN, PEN/PET, PEN/PBT, PEN/PETG and PEN/PETcoPBT, where "PBT" refers to polybutylene terephthalate, "PETG" refers to a copolymer of PET employing a second glycol (usually cyclohexanedimethanol), and "PETcoPBT" refers to a copolyester of terephthalic acid or an ester thereof with a mixture of ethylene glycol and 1,4-butanediol; (3) for mirror films (including colored mirror films), PEN/PMMA, coPEN/PMMA, PET/PMMA, PEN/Ecdel^{™}, PET/Ecdel^{™}, PEN/sPS, PET/sPS, PEN/coPET, PEN/PETG, and PEN/THV^{™}, where "PMMA" refers to polymethyl methacrylate, Ecdel^{™} is a thermoplastic polyester or copolyester (believed to comprise cyclohexanedicarboxylate units, polytetramethylene ether glycol units, and cyclohexanedimethanol units) commercially available from Eastman Chemical Co., and THV^{™} is a fluoropolymer commercially available from 3M Company.

Further details of suitable multilayer optical films and related constructions can be found in U.S. Pat. No. 5,882,774 (Jonza et al.), and PCT Publications WO 95/17303 (Ouderkirk et al.) and WO 99/39224 (Ouderkirk et al.). Polymeric multilayer optical films and film bodies can comprise additional layers and coatings selected for their optical, mechanical, and/or chemical properties. See U.S. Pat. No. 6,368,699 (Gilbert et al.). The polymeric films and film bodies can also comprise inorganic layers, such as metal or metal oxide coatings or layers.

Various permanent and removable grade adhesive compositions 14 may be coated on the opposite side of the substrate 12 (i.e. to that of the hardcoat 18) so the article 10 can be easily mounted to a display surface. Typically, the adhesive 14, substrate 12, and hard coating layer 18 are prepackaged as a film 19 having a release layer (not shown) attached to the adhesive 14. The release layer is then removed and the adhesive layer 14 coupled to a housing or other area of the display 16 to form the optical display 16.

Suitable adhesive compositions 14 include (e.g. hydrogenated) block copolymers such as those commercially available from Kraton Polymers, Westhollow, TX under the trade designation "Kraton G-1657", as well as other (e.g. similar) thermoplastic rubbers. Other exemplary adhesives include acrylic-based, urethane-based, silicone-based and epoxy-based adhesives. Preferred adhesives are of sufficient optical quality and light stability such that the adhesive does not yellow with time or upon weather exposure so as to degrade the viewing quality of the optical display. The adhesive can be applied using a variety of known coating techniques such as transfer coating, knife coating, spin coating, and die coating. Exemplary adhesives are described in U.S. Patent Application Publication No. 2003/0012936. Several of such adhesives are commercially available from 3M Company, St. Paul, MN under the trade designations 8141, 8142, and 8161. The substrate layer 12 may consist of any of a wide variety of non-polymeric materials, such as glass, or polymeric materials, such as polyethylene terephthalate (PET), bisphenol A polycarbonate, cellulose triacetate, poly(methyl methacrylate), and biaxially oriented polypropylene which are commonly used in various optical devices.

It is contemplated that the present invention will find primary application in optical coatings and films including antireflective film, for example. Furthermore, the present invention includes all positional isomers and homologs of the various constituents of the present invention. It will further be understood that the foregoing description of an embodiment of the present invention is for illustrative purposes only. As such, the various structural and operational features herein disclosed are susceptible to a number of modifications commensurate with the abilities of one of ordinary skill in the art, none of which departs from the scope of the present invention as defined in the appended claims.

The invention is further illustrated by the Examples given below.

### EXAMPLE 1:

### a. The synthesis of acrylic acid 2,2-bis-(naphthaleno2-ylsulfanylmethyl)-propane-1,3-diol(1).

Equip a one-liter three-neck round bottom flask with a mechanical stirrer, condenser and temperature probe. To the flask is added 25 grams 2-thionaphthalene, 230 grams dimethylformamide, and 20.4 grams 2,2-bis(bromomethyl)-1,3-propanediol. Heat this mixture, with good agitation, to 75°C. To the stirred flask is added dropwise over about ½ hour 156 ml of 1 molar potassium t-butoxide in 2-methyl-2-propanol. Once the addition is complete, hold the reaction at 75°C for about ½ hour.
Cool the reaction to about 20°C, then use an external ice bath and to the flask add 560 grams water, keeping the pot temperature at 20-30°C. To the flask add 500 grams of ethyl acetate. Stir well and phase split. Remove the upper organic phase, then re-extract the aqueous phase with 300 grams of ethyl acetate. Wash the combined organic phase with a mixture of 300 grams water and 20 grams concentrated HCl. Wash the combined organic phase with a mixture of 300 grams water and 30 grams sodium chloride. Strip the solvent from the organic phase on a rotary-evaporator.

Recrystallize the resulting solid from two of the above reactions in 1400 grams toluene. Air dry the product The yield of collected off-white solid is 48.0 grams (73%). The product has a mp t. of 121-125°C, and ¹H- and ¹³C-NMR analysis confirms it is the desired product (**1**).

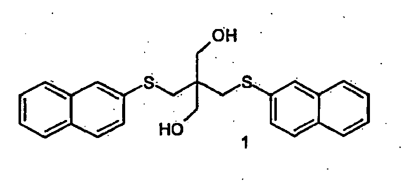

### b. Synthesis of acrylic acid 2-acryloyloxymethyl-3-(naphthalene2-ylsulanyl)-2-(naphthalene-2-ylsulfanylmethyl)-propyl ester (2).

Equip an one-liter three-neck round bottom flask with a mechanical stirrer, condenser and temperature probe. To the flask is added 25 grams of the above intermediate (**1**), along with 250 grams dimethylformamide, 14.4 grams triethylamine, and 0.01 grams each of salicylaldoxime and tetramethyl phenylenediamine. Heat this mixture to 40°C with good agitation. To the flask add 11.8 grams acryloyl chloride over about ½ hour, keeping the pot at about 40°C. Hold the reaction at 40°C for one hour. Add three grams triethylamine to the flask, then add two grams acryloyl chloride dropwise. Hold the reaction at 40°C for about one hour.

Cool the reaction to room temperature. To the flask add 430 grams water, then 520 grams ethyl acetate. Add five grams concentrated HCl and stir well, then phase split off the aqueous phase. Wash the organic phase with a mixture of 300 grams water and 30 grams sodium carbonate. Wash the organic phase with a mixture of 300 grams water and 30 grams sodium chloride. Strip the solvent on a rotary-evaporator to give an opaque light yellow liquid that turns to a semi-solid upon standing. The refractive index is 1.6490. ¹H-and ¹³C-NMR analysis confirms it is >95% of the desired product (**2**). The desired product 2 exhibited ¹H-NMR signals (d6-DMSO, TMS) at 3.4 ppm (-CH₂-S-Napth), 4.2 ppm (-CH₂-OAcr), 5.8, 6.0 and 6.2 ppm (acrylate olefinic protons), 7.4-7.5 ppm and 7.7-7.9 ppm (aromatic protons).

The desired product 2 exhibited ¹³C-NMR signals (d6-DMSO, TMS) at 35.8.ppm (**-CH₂-**S-Napth), 43.3 ppm (pentaerythritol-skeleton quaternary carbon), 64.2 ppm (**-CH₂**-OAcr), 164.7 ppm (acrylate carbonyl), 131.2 ppm ("4a" quaternary carbon, tentative assignment), 133.2 ppm and 133.4 ppm (quaternary carbon ipso to sulfur and "8a" quaternary carbon; specific assignments not yet determined) and 125.8, 126.6(2C per naphthyl ring), 126.9, 127.0, 127.5 (2C per naphthyl ring) and 128.4 ppm (remaining aromatic carbons).

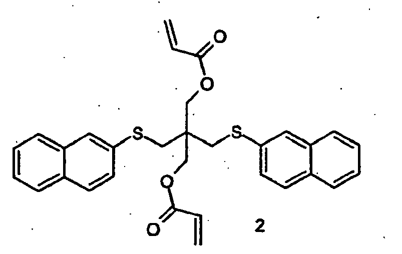

### c. Synthesis of 2,2-bis-phenylsnlfanylmethyl-propane-1,3-diol (3):

The synthesis was conducted as above, except using a stoichiometric equivalent of thiophenol rather than 2-thionaphthalene. The crude reaction mixture was worked up as described above to give a light brown oil. The yield was about 100%. The material was analyzed by ¹H- and ¹³C-NMR and found to be about 60% of the desired intermediate (3). This material was used as is in the following step.

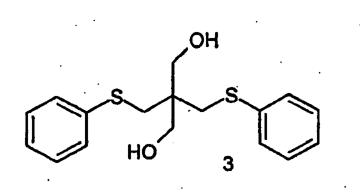

### d. Synthesis of acrylic acid 2-acryloyloxymethyl-3-phenylsulfanyl-2-phenylsulfanylmethyl-propyl ester (4).

The synthesis was conducted as described above, except using a stoichiometric equivalent of intermediate (**3**) rather than intermediate (**1**). Obtain 69% yield of the acrylate monomer product as a light yellow oil. This material was analyzed by ¹H- and ¹³C-NMR and found to be about 60% of the desired product

A small sample of crude material (**4**) was purified by column chromatography using ethyl acetate and hexanes, with the desired product collected and the solvent removed on a rotary evaporator. This material was analyzed by ¹H- and ¹³C-NMR and found to be >95% of the desired product (**4**). The refractive index was measured to be about 1.5837. The desired product (**4**) exhibited ¹H-NNM signals (CDCl₃, TMS) at 3.2 ppm (-CH₂-S-Ar), 4.2 ppm (-CH₂-OAcr), 5.8, 6.0, and 6.3 ppm (acrylate olefinic protons) and 7.2-7.4 ppm (aromatic protons).

The desired product (**4**) exhibited ¹³C-NMR signals (CDCl₃, TMS) at 37.6 ppm (-CH₂-S-Ar), 43.9 ppm (pentaerythritol-skeleton quaternary carbon), 64.5 ppm (-CH₂-OAcr), 165.3 ppm (acrylate carbonyl), 136.1 ppm (quaternary carbon ipso to sulfur), 129.0 and 130.5 ppm (2C each; aromatic methane carbons ortho- and meta- to sulfur substitution; specific assignments not determined), 126.8 ppm (aromatic methane carbon para- to sulfur substitution), 131.1 ppm (acrylate olefinic methylene), 127.7 ppm (acrylate olefinic methane; tentative assignment) and 126.8 ppm (aromatic methane carbon para- to sulfur; tentative assignment).

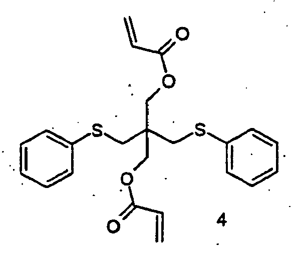

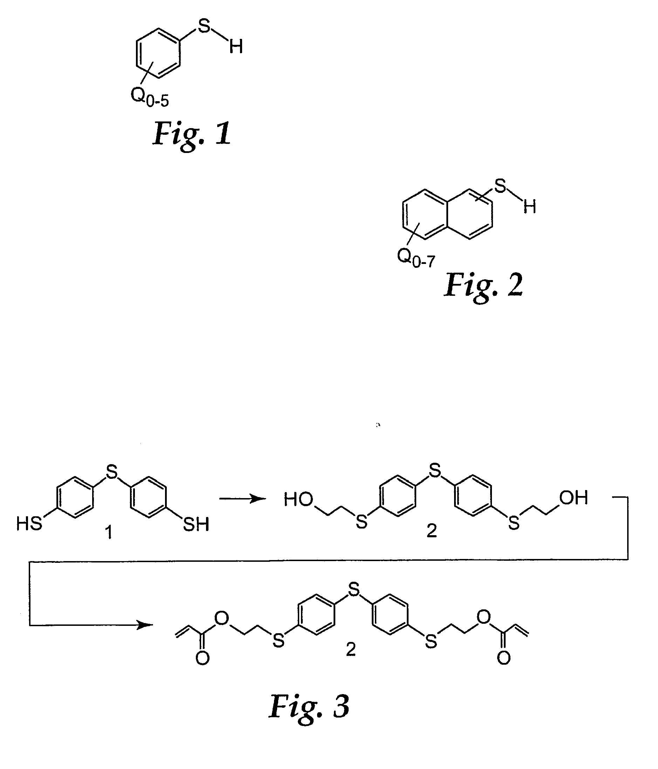

The above synthetic strategies may also incorporate substituted thiophenols and substituted thionaphthalenes. Figures 1 and 2 respectively exemplify these classes. Q in Figure 1 is selected from the group including Br, F, Cl, or R or CF₃, each of which may be present at 0-5 in any combination, and, wherein R is a group containing 1-6 carbons that may be straight or branched. Q in Figure 2 is selected from the group including Br, F, Cl, or R or CF₃, each of which may be present at 0-7 in any combination, and, wherein R is a group containing 1-6 carbons that may be straight or branched. Both classes exemplified in Figures 1 and 2 are commercially available from suppliers well known in the art. Exemplary substituted thiophenols include 2-bromothiophenol and 2-isopropylthiophenol, both available from the Aldrich Chemical Company of Milwaukee, Wisconsin.

Relative to Example 1, a method of forming an aromatic sulfur acrylate monomer, or a thio aromatic acrylate monomer, is described as follows, and as augmented by various reagents and process conditions, and their analogs, described in Example 1:
1. providing at least two moles of a thio aromatic compound;
2. providing at least one mole of a di-halogenated diol;
3. reacting the thio aromatic compound with the di-halogenated diol to form a di-thio aromatic diol;
4. providing at least two moles of acryloyl chloride and at least two moles of triethylamine; and
5. reacting the thio aromatic diol with reactive amounts of acryloyl chloride and triethylamine to form a di-thio aromatic di-acrylate monomer.

Other methods of forming the acrylate ester are well known to those practiced in the art and are included generally in this description. Other aspects of the invention include thio aromatic acrylate monomers formed by the method given above, wherein preferred monomers include acrylic acid 2-acryloyloxymethyl-3-(naphthalene-2-ylsulfanyl)-2-(naphthalene-2-ylsulfanylmethyl)-propyl ester (**2**) and acrylic acid 2-acryloyloxymethyl-3-phenylsulfanyl-2-phenylsulfanylmethyl-prapyl ester (**4**). Further aspects of the invention include hard coats and antireflective constructions comprising a thio aromatic acrylate produced by the method given above, and display systems comprising these hard coats and/or antireflective coatings produced from the method given above.

Related aspects of the method of forming an aromatic sulfur acrylate include the monomers formed by the process, a hard coat containing the monomer, and a display system containing the hard coat formed with the monomer. Preferred embodiments of products formed from the method include acrylic acid 2-acryloyloxymethyl-3-(naphthalene-2-ylsulfanyl)-2-(naphthalene-2-ylsulfanylmethyl)-propyl ester (2) and acrylic acid 2-acyloyloxymethyl-3-phenylsulfanyl-2-phenylsulanylmethyl-propyl ester (4).

### EXAMPLE 2:

### Preparation of Surface Modified Zirconia Nanonarticles

### ZrO₂ methacryloxypropyltrimethoxysilane

### Dialysis of ZrO₂ Sol

ZrO₂ sol (207.4g) was charged to a dialysis bag and dialyzed in 3500g of de-ionized water for 6 hr. Sigma diagnostics tubing MWCO > 1200 was used. The sol was isolated (34.03% solids) and used for the silane treatment.

The dialyzed ZrO₂ sol (80g, 34.03% solids, 30.8 % ZrO₂) was charged to a 473,18 ml (lboz.) Water (80g) was charged with stirring. Methoxypropanol (160g), methacryloxypropyl trimethoxy silane (8.59g) was charged to a 500ml beaker with stirring. The methoxypropanol mixture was then charged to the ZrO₂ sol with stirring. The jar was sealed and heated to 90°C for 3hr 15 min. After heating the mixture was stripped to 170g via rotary evaporation and a white slurry was obtained.

De-ionized water (258g) and concentrated NH₃ (5.7g, 29wt%) were charged to a one-liter beaker. The above concentrated sol was added to this with minimal stirring. The solids were isolated as a damp filter cake via vacuum filtration. The damp solids (82g) were dispersed in methoxypropanol (200g). The mixture was then concentrated (97g) via rotary evaporation. Methoxypropanol (204g) was added and the mixture was concentrated (85.5g) via rotary evaporation. Methoxypropanol was charged (205 g) and the mixture was concentrated via rotary evaporation. The final product 91.46g was isolated at 27.4% solids. The mixture was filtered with a 1 µm filter.

The US patent US 2006/0148950 A1 filed December 30, 2004, describes exemplary 3M zirconia particles. As known in the industry, Nalco and Buhler also provide zirconia particles which can be used in the present invention.

### EXAMPLES 4-10

Examples 6, 7 and 9 are reference examples**.**

Each composition represented by Examples 4-10 in the table given below was dissolved in ethyl acetate and coated using a wire wound rod to a dry thickness of about 4 (microns) µm They were dried for one minute in a 100°C air circulating oven. They were then cured using a 500-watt Fusion UV processor at 6.1 m/min (20 ft/min) using two passes. The zirconia was functionalized with methacrylate silane. The silica was also functionalized with methacrylate silane. 2-Naphthalene thio ethoxy acrylate (2-NSEA), is employed as an aromatic sulfur acrylate, and is made in a known manner.

Acrylic acid 2-(naphthalen-2-ylsulfanyl)-ethyl ester (**6**) is employed as an aromatic monofunctional sulfur acrylate monomer and is made as described below. The structure is also given bellow.

### Synthesis of 2-(naphthalen-2-ylsulfanyl)-ethanol (5):

Equip a twelve liter three neck round bottom flask with a temperature probe, mechanical stirrer and condenser. Add 2000 g 2-thionaphthol, 4000 g toluene, and 63.1 g triethylamine. Using medium agitation, heat the batch to 95°C. To the reaction mixture add dropwise 1209 g of melted ethylene carbonate. The batch evolves CO₂. The addition takes about three hours. At the conclusion of the addition, hold the reaction mixture at 95°C for about twelve hours. Cool the batch to room temperature. Gas chromatography indicates less than 1% residual 2-thionaphthol. Strip the solvent on a rotary evaporator to give the intermediate alcohol, which is a yellow oil that crystallizes upon standing. The yield is 1815 g. The melting point of this material is 61-63°C.

### Synthesis of acrylic acid 2-(naphthalen-2-ylsulfanyl)-ethyl ester (6):

Equip a 250 ml three neck round bottom flask with a temperature probe, mechanical stirrer and condenser. To the flask add 50 g of the above intermediate, 29.7 g triethylamine, 0.01 g each of salicylaldoxime and tetramethyl phenylenediamine and 430 g of t-butylmethyl ether. Heat the reaction mixture to 40°C and add 24.4 g acryloyl chloride dropwise to the reaction mixture. Hold the reaction mixture at 40°C for one hour. GC shows the reaction mixture to have no residual starting material. Cool the reaction mixture to room temperature. To the flask add 400 grams water. Add five grams concentrated HCl and stir well, then phase split off the aqueous phase. Wash the organic phase with a mixture of 300 grams water and 30 grams sodium carbonate. Wash the organic phase with a mixture of 300 grams water and 30 grams sodium chloride. Strip the solvent on a rotary-evaporator to give a yellow oil. The yield is 50 g. The refractive index of this monomer (**6**) is 1.6209.

The desired product **6** exhibited ¹³C-NMR signals (d6-DMSO, TMS) at 32.0 ppm (**-CH₂-**S-Naphth), 62.9 ppm (-CH₂-OAcr), 165.7 ppm (acrylate carbonyl), and 125.8, 126.6 (2C per naphthyl ring), 126.9, 127.0, 127.5 (2C per naphthyl ring) and 128.4 ppm (remaining aromatic carbons).

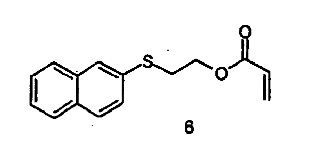

Acrylic acid 2-{4-[4-(2-acryloyloxy-ethylsulfanyl)-phenylsulfanyl]-phenylsofanyl}-ethyl ester is employed as an aromatic sulfur acrylate. Pentaerythritol tri- and tetraacrylate mixture (SR 295) is employed as a crosslinker. Daracur 4265 and TPO were employed as photoinitiators and are available from well known suppliers thereof For example, TPO and Daracure 4265 are photoinitiators available from Ciba-Geigy of Tarrytown, New York.

The coating composition was coated as a wet film and dried in an oven to remove the solvent and then subjected to ultraviolet radiation using an H-bulb or other lamp at a desired wavelength, preferably in an inert atmosphere (less than 50 parts per million oxygen). The reaction mechanism causes the multifunctional component of the acrylate phase to covalently crosslink with the thio acrylate monomer phase. The resultant film as a high index hardcoat optical coating for example, thus constitutes a co-crosslinked polymer network having a thickness of 2-8 (microns) µm and more preferably about 3-6 (microns) µm. It would be possible to use this composition in thinner layers in an AR construction in the range of 75-130.

Abrasion Resistance was run using a modified Oscillating Sand Method (ASTM F 735-94). An orbital shaker was used (VWR DS-500E, from VWR Bristol, CT). The sample was placed in a 473,18 ml (lboz.) jar (W216922 from Wheaton, Millville, NJ) covered with 50 grams of 20-30 mesh (850-600 µm) Ottawa sand (VWR, Bristol, CT). The shaker was set at 400 rpm for one hour. The haze of the sample was measured before and after testing using a Lambda 900 Spectrophotometer (Perkin Elmer, Shelton, CT) in diffuse transmission mode at 450 nm. The difference in before and after haze is recorded as the abrasion of the sample. The refractive index was measured with a Metricon™ refractometer.

**Table 1**

| Ex | Zirc. | Si | SR295 | acrylic acid 2-{4-[4-(2-acryloyloxy-ethylsulfanyl)-phenylsulfanyl]-phenylsulfanyl}-ethyl ester (**8**) | acrylic acid 2-(naphthalen-2-ylsulfanyl)-ethyl ester (**6**): | P.I. % | RI | Abrasion Resistance |
|---|---|---|---|---|---|---|---|---|
| 4 | | 50 | 25 | 25 | | Dar 4265 4 | 1.54 | 2.2 |
| 5 | 50 | | 25 | 25 | | Dar 4265 4 | 1.64 | 1.7 |
| 6 | 60 | | | | 40 | Dar 4265 2 | | 7.7 |
| 7 | 60 | | 40 | | | Dar 4265 2 | | 1.5 |
| 8 | 60 | | 15 | | 25 | Dar 4265 2 | | 1.6 |
| 9 | 50 | | 50 | | | TPO 3.3 | 1.59 | 3.0 |
| 10 | 50 | | 17 | | 33 | TPO 3.3 | 1.66 | 2.8 |

As shown in Table 1, the examples indicate that all three components, functionalized zirconia, acrylate crosslinker, and aromatic sulfur acrylate are required to produce durable high index hard coats. Examples 4 and 5 indicate that zirconia is required for a high refractive index coating and that when it is combined with the acrylate crosslinker and aromatic sulfur acrylate it gives similar durability to silica. Example 6 indicates that having just the aromatic sulfur acrylate combined with the zirconia results in poor durability. On the other hand, combining the zirconia and the crosslinker and aromatic sulfur acrylate (Example 8) results in similar durability to that resulting from zirconia combined with the crosslinker (Example 7). Most importantly, Examples 9 and 10 indicates that replacing part of the crosslinker with the aromatic sulfur acrylate (Example 10) provides similar durability but higher refractive index compared to just the crosslinker and the zirconia (Example 9).

### EXAMPLE 11:

The synthesis of acrylic acid 2-{4-[4-(2-acryloyloxy-ethylsulfanyl)-phenylsulfanyl]-phenylsulfanyl}-ethyl ester (**8**) as shown in Figure 3.

A mixture containing 15 grams of 4,4'-thiobisbenzenethiol (**1**), 11.6 grams of ethylene carbonate, and 0.6 grams of triethylamine in 30 ml of toluene was heated at 90°C for four hours. The mixture was recrystallized from 10 percent ethylacetate in toluene to give 13.2 grams of 2-{4-[4-(2-hydroxy-ethylsulfanyl}-phenylsulfanyl]-phenylsulfanyl}-ethanol (**7**).

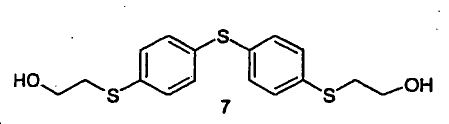

A solution containing 13 grams of (**7**) and 14.9 grams of diisopropylethylamine was cooled to 5°C, and to it was added 10.4 grams of acryloyl chloride over a period of 20 minutes. The mixture was stirred at 5-10°C for two hours after which it was poured into a mixture containing 75 ml of 1N HCl and 100 ml of ethyl acetate. After stirring for five minutes the organic phase was removed and washed with saturated KCl solution followed by 10 percent aqueous potassium bicarbonate. The solvent was removed and the residue was purified on column chromatography (silica gel eluted with 25% ethylacetate/hexane) to yield in the first fraction 8.5 grams of (**8**).

The desired product **8,** formed by the method of Example 11, exhibited 1H-NMR signals (CDCl₃, TMS) at 3.2 ppm [-CH₂- alpha to sulfur], 4.3 ppm [-CH₂- alpha to oxygen], 5.8 ppm and 6.4 ppm [olefinic methylene; cis- and trans- protons, respectively], 6.1 ppm [olefinic methine] and 7.26 and 7.32 ppm [aromatic methine protons].

The desired product **8** exhibited ¹³C-NMR signals (CDCl₃, TMS) at 32.1 ppm [-CH₂-alpha to sulfur], 62.8 ppm [-CH₂- alpha to oxygen], 128.0 ppm [acrylate olefinic methine], 130.2 and 131.5 ppm [aromatic methine carbons], 131.3 ppm [acrylate olefinic ethylene], 133.7 and 134.5 ppm [aromatic ring carbons ipso- to sulfur] and 165.8 ppm [acrylate carbonyl].

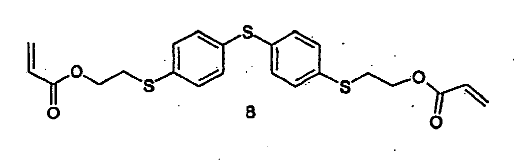

### EXAMPLE 12:

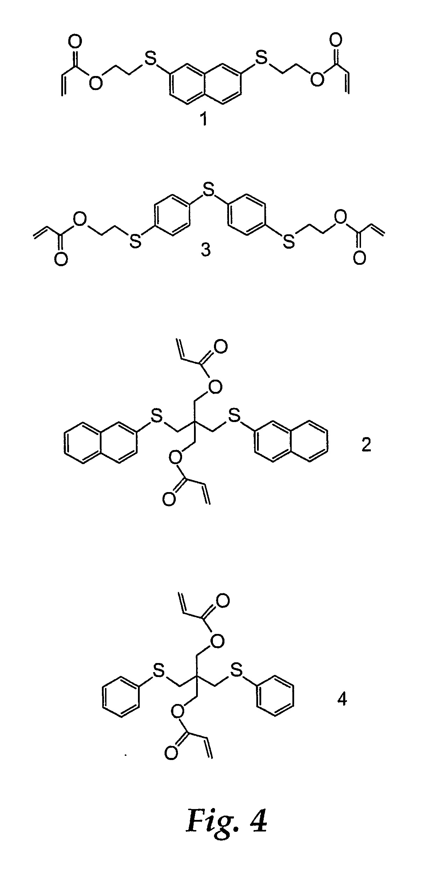

The synthesis of acrylic acid 2-[7-(2-acryloyloxy-ethylsulfanyl)-naphthalen-2-ylsulfanyl]-ethyl ester (11), (**11**) being shown in Figure 4.

To a mixture containing 32 grams of 2,7-dihydroxynaphthalene and 26.3 grams of potassium hydroxide in 140 ml of water which had been cooled to 10°C was slowly added 56.8 grams of dimethylthiocarbamoyl chloride in 88 ml of tetrahydrofuran. The temperature was maintained below 12°C throughout the addition. The solid which formed was filtered, washed with water, reslurried in methanol and filtered to produce 50.2 grams of dimethyl-thiocarbamic acid O-(7-dimethylthiocarbamoyloxy-naphthalen-2-yl) ester. After drying this was placed in a round bottom flask and heated under a nitrogen atmosphere at 250°C for 1.5 hours. The mixture was cooled and the solid recrystallized from ethyl acetate to give 17 grams of dimethyl-thiocarbamic acid S-(7-dimethylcarbamoylsulfanyl-naphthalene-2-yl) ester. This was added to a mixture of 50 ml of ethanol and a solution of 22.4 grams of potassium in 32 ml of water, and then heated at reflux for 30 minutes. The mixture was cooled, diluted with 300 ml of water and acidified with hydrochloric acid. The solid which formed was filtered and dried yielding 8.5 grams of naphthalene-2,7-dithiol (**9**).

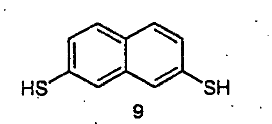

A mixture containing 5.4 grams of naphthalene-2,7-dithiol (**9**), 5.4 grams of ethylene carbonate and 0.26 grams of triethylamine in 20 ml of toluene was heated to 90°C for four hours. The mixture was cooled and the solid was removed by filtration. The solid was recrystallized from ethyl acetate to yield 5.3 grams of 2-[7-2-hydroxy-ethylsulfanyl)-naphthalen-2-ylsulfanyl]-ethanol (**10**).

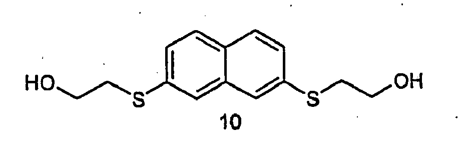

A mixture containing 5.2 grams of (**10**) and 7.2 grams of diisopropylethylamine in 40 ml of tetrahydrofuran was cooled to 5°C and to it was added five grams of acryloyl chloride.

The mixture was stirred at this temperature for two hours after which it was poured into a mixture containing 75 ml of 1N HCl and 100 ml of ethyl acetate. After stirring for five minutes the organic phase was separated and washed with saturated potassium chloride solution followed by 10 percent potassium carbonate. The solvent was removed and the residue was purified by column chromato graphy on silica gel and eluted with 25 percent ethyl acetate in hexane to yield in the first fraction of 2.6 grams of (11).

The desired product (**11**), formed by the method of Example 12, exhibited ¹H-NMR X signals (CDCl₃, TMS) at 5.8 ppm, 6.1 ppm, and 6.4 ppm (acrylic olefinic protons), 7.4 and 7.7 ppm (aromatic ring methines in 3-, 4-, 5-, and 6-positions of naphthalene ring system), and 7.75 ppm (aromatic ring methines in 1- and 8-positions of naphthalene ring system).

The desired product (11) exhibited ¹³C-NMR signals (CDCl₃, TMS) at 165.8 ppm (acrylate carbonyl), 134.0 ppm (quaternary ring carbon at ring junction between 4- and 5-position), 133.8 ppm (quaternary ring carbon ipso to sulfur), 131.3 ppm, (acrylate olefinic methylene), 130.3 ppm (quaternary ring carbon at ring junction between 1- and 8-position) and 128.4 ppm, 128.0 ppm, 127.3 ppm, and 126.5 ppm (naphthalene ring methines and acrylate olefinic methine).

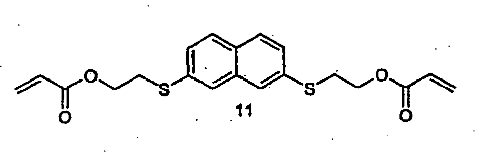

It is believed that the method given above may be used to prepare other naphthalenic isomers of (**11**) simply by appropriately selecting the starting naphthalene diol and following the same method.

Table 2 as follows sets forth the composition of various exemplary compositions as well the RI and Abrasion test results for each composition.

**Table 2**

| Ex | Zirc. wt% | SR295 wt% | Resin wt % | P.I. wt% Irg 907 | Abrasion Resistance | RI |
|---|---|---|---|---|---|---|
| 15 | 48 | 48 | 0 | 4 | 1.7 | 1.59 |
| 16 | 48 | 24 | 24 acrylic acid 2-(naphthalen-2-ylsulfanyl)-ethyl ester (**6**): | 4 | 1.8 | 1.64 |
| 17 | 48 | 24 | 24 acrylic acid 2-[7-(2-acryloyloxy-ethylsulfanyl)-naphthalen-2-ylsulfanyl]-ethyl ester (**11**) Ex. 12 | 4 | 2.2 | 1.63 |
| 18 | 48 | 24 | 24 acrylic acid 2-{4-[4-(2-acryloyloxy-ethylsulfanyl)-phenylsulfanyl]-phenylsulfanyl}-ethyl ester (**8**) Ex.11 | 4 | 2.1 | 1.64 |
| 19 | 48 | 24 | 24 acrylic acid 2-acryloyloxymethyl-3-(naphthalene-2-ylsulfanyl)-2-(naphthalene-2-ylsulfanylmethyl)-propyl ester (**2**). **Ex. 1b** | 4 | 2.3 | 1.66 |
| 20 | 48 | 24 | 24 acrylic acid 2-acryloyloxymethyl-3- phenylsulfanyl-2-phenylsulfanylmethyl-propyl ester (**4**). **Ex. 1d** | 4 | | 1.61 |

| | | | | | | |
|---|---|---|---|---|---|---|
| Example 15 is a reference example. | | | | | | |

## Claims

1. A display comprising:
a light transmissive substrate;
a hardcoat layer coupled to the substrate wherein the hardcoat layer comprises the reaction product of surface modified inorganic nanoparticles, at least one acrylate crosslinking agent, and an aromatic sulfur acrylate monomer, and
an optional low refractive index layer coupled to said hardcoat layer.

2. The display of claim 1 wherein said inorganic nanoparticles are surface modified zirconia.

3. The display of claim 1 wherein the hardcoat layer has a refractive index of at least 1.58.

4. The display of claim 1 wherein the aromatic sulfur acrylate monomer contains a naphthalenic group or more than one aromatic group.

5. The display of claim 1 wherein said aromatic sulfur acrylate monomer is selected from the group of compounds defined by the following naphthalenic and phenylic formulas:

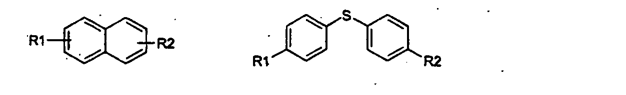

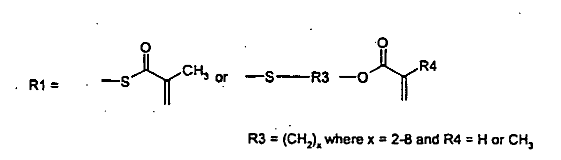

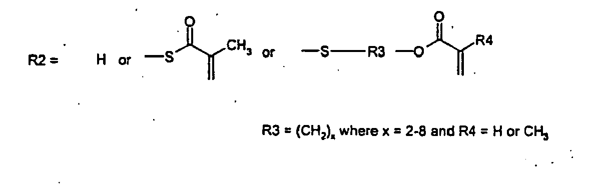

6. The display of claim 1 wherein said aromatic sulfur acrylate monomer is selected from the group consisting of acrylic acid 2-[7-(2-acryloyloxy-ethylsulfanyl)-naphthalen-2-ylsulfanyl]-ethyl ester and acrylic acid 2-{4-[4-(2-acryloyloxy-ethylsulfanyl)-phenylsulfanyl]-phenylsulfanyl}-ethyl ester.

## Patentansprüche

1. Anzeige, umfassend:
ein lichtdurchlässiges Substrat;
eine Hardcoat-Schicht, die an das Substrat gekoppelt ist, wobei die Hardcoat-Schicht das Reaktionsprodukt von oberflächenmodifizierten anorganischen Nanopartikeln, mindestens einem Acrylat-Vernetzungsmittel und einem aromatischen Schwefelacrylatmonomer umfaßt, und
einer fakultativen Schicht mit niedrigem Brechungsindex, die an die Hardcoat-Schicht gekoppelt ist.

2. Anzeige nach Anspruch 1, wobei es sich bei den anorganischen Nanopartikeln um oberflächenmodifiziertes Zirconiumoxid handelt.

3. Anzeige nach Anspruch 1, wobei die Hardcoat-Schicht einen Brechungsindex von mindestens 1,58 aufweist.

4. Anzeige nach Anspruch 1, wobei das aromatische Schwefelacrylatmonomer eine naphthalenische Gruppe oder mehr als eine aromatische Gruppe enthält.

5. Anzeige nach Anspruch 1, wobei das aromatische Schwefelacrylatmonomer aus der Gruppe von Verbindungen ausgewählt ist, die durch die folgenden naphthalenischen und phenylischen Formeln definiert sind:

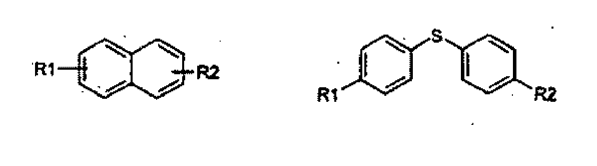

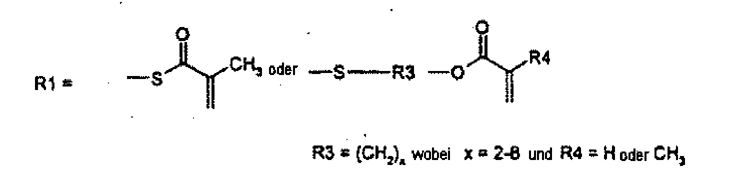

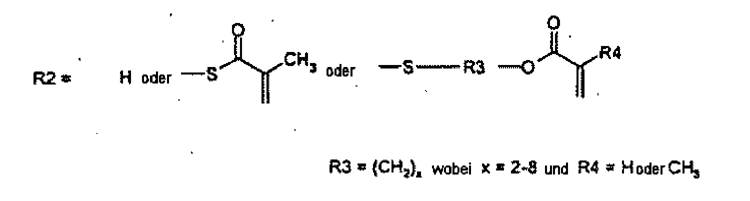

6. Anzeige nach Anspruch 1, wobei das aromatische Schwefelacrylatmonomer aus der Gruppe bestehend aus Acrylsäure-2-[7-(2-acryloyloxyethylsulfanyl)-naphthalin-2-ylsulfanyl]ethylester und Acrylsäure-2-{4-[4-(2-acryloyloxyethylsulfanyl)phenyl-sulfanyl]phenylsulfanyl}ethylester ausgewählt ist.

## Revendications

1. Afficheur comprenant :
un substrat transmissif ;
une couche dure couplée au substrat, la couche dure comprenant le produit de la réaction entre des nanoparticules inorganiques modifiées en surface, au moins un agent de réticulation d'acrylate et un monomère d'acrylate de soufre aromatique ; et
une couche facultative de faible indice de réfraction couplée à ladite couche dure.

2. Afficheur selon la revendication 1 dans lequel lesdites nanoparticules inorganiques sont de la zircone modifiée en surface.

3. Afficheur selon la revendication 1 dans lequel la couche dure possède un indice de réfraction d'au moins 1,58.

4. Afficheur selon la revendication 1 dans lequel le monomère d'acrylate de soufre aromatique contient un groupe naphtalénique ou plus d'un groupe aromatique.

5. Afficheur selon la revendication 1 dans lequel ledit monomère d'acrylate de soufre aromatique est choisi dans le groupe des composés définis par les formules naphtaléniques et phényliques suivantes :

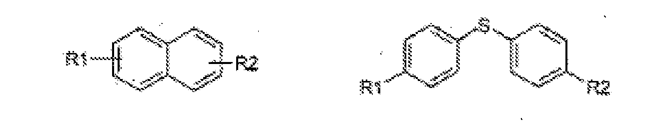

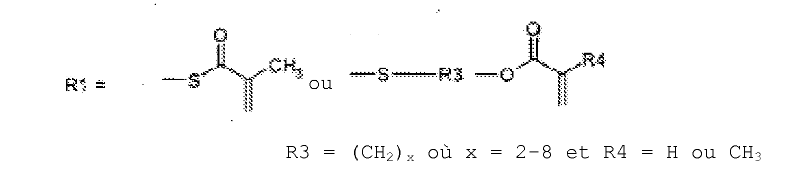

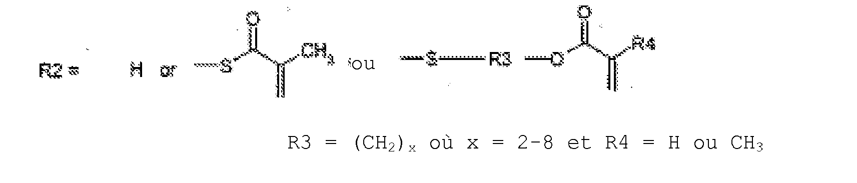

6. Afficheur selon la revendication 1 dans lequel ledit monomère d'acrylate de soufre aromatique est choisi dans le groupe constitué par l'ester 2-[7-(2-acryloyloxy-éthylsulfanyl)-naphtalén-2-ylsulfanyl]-éthylique d'acide acrylique et l'ester 2-{4-[4-(2-acryloyloxy-éthylsulfanyl)-phénylsulfanyl]-phénylsulfanyl}-éthylique d'acide acrylique.
